# EUROPÄISCHE PATENTANMELDUNG

(11) **EP 1 892 137 A2**
(43) Veröffentlichungstag der Anmeldung: **27.02.2008**
(21) Anmeldenummer: 07015314.3
(22) Anmeldetag: 03.08.2007
(51) Int. Cl.: B60K 15/077

(54) **Ventil für einen Kraftstoffbehälter und Kraftstoffbehälter mit einem derartigen Ventil**

(30) Priorität: 21.08.2006 EP 06017337
(71) Anmelder: Salzlechner, Rainer, 5112 Lamprechtshausen (AT)
(72) Erfinder: Salzlechner, Rainer, 5112 Lamprechtshausen (AT)
(74) Vertreter: Benda, Ralf

(57) **Zusammenfassung**

Es werden ein Kraftstoffbehälter (12) mit einem Ventil (10) für eine Zwischenwand (11A,11B) des Kraftstoffbehälters (12) und ein Ventil (10) für eine Zwischenwand (11A, 11 B) eines Kraftstoffbehälters (12) offenbart. Das Ventil (10) umfasst einen Ventilkörper (14), eine im Ventilkörper (14) vorgesehenen Ventilkammer (15) mit einer Längsachse (17), eine Elnlassöffnung (18) und eine Auslassöffnung (19), die beide mit der Ventilkammer (15) verbunden sind, und ein in der Ventilkammer (15) angeordnetes Rollelement (20), das durch die Schwerkraft oder durch auf das Rollelement (20) einwirkende Trägheitskräfte zwischen der Einlassöffnung (18) und der Auslassöffnung (19) bewegbar ist, so dass die Einlassöffnung (18) durch das Rollelement (20) verschüeßbar ist, wobei die Elniassöffnung (18) exzentrisch zur Längsachse (17) der Ventilkammer (15), angeordnet ist.

Es werden des Weiteren eine Ausrichtvorrichtung zur Drehlagenpostionierung eines Ventils (10) relativ zur Zwischenwand (11A, 11B) eines Kraftstoffbehälters (12) und ein Verfahren zum Einbau einer Ventilvorrichtung in eine Zwischenwand (11A, 11 B) eines Kraftstoffbehälters (12) beschrieben.

## Beschreibung

Die Erfindung betrifft ein Ventil für eine Zwischenwand eines Kraftstoffbehälters für Flüssigkraftstoffe und einen Kraftstoffbehälter für Flüssigkraftstoffe mit einem derartigen Ventil.

Aus der Fahrzeugtechnik, insbesondere bei Lastkraftwagen, sind Kraftstoffbehälter für Flüssigkraftstoffe bekannt, deren Innenraum in mehrere Kammern unterteilt ist. Die Teilung des Kraftstoffbehälters in zumindest zwei Kammern verhindert bei Schräglage des Kraftstoffbehälters, zum Beispiel bei Bergauf- oder Bergabfahrten, die Sammlung des Kraftstoffs im am tiefsten gelegenen Teil des Kraftstoffbehälters, wodurch die Kraftstoffzufuhr zum Motor unterbrochen werden kann, Die Unterteilung verhindert auch ein zu starkes Mitschwingen des gesamten im Kraftstoffbehälter enthaltenen Flüssigkraftstoffs durch Trägheitskräfte, zum Beispiel beim Beschleunigen und Bremsen des Kraftfahrzeugs, in dem der Kraftstoffbehälter angeordnet ist.

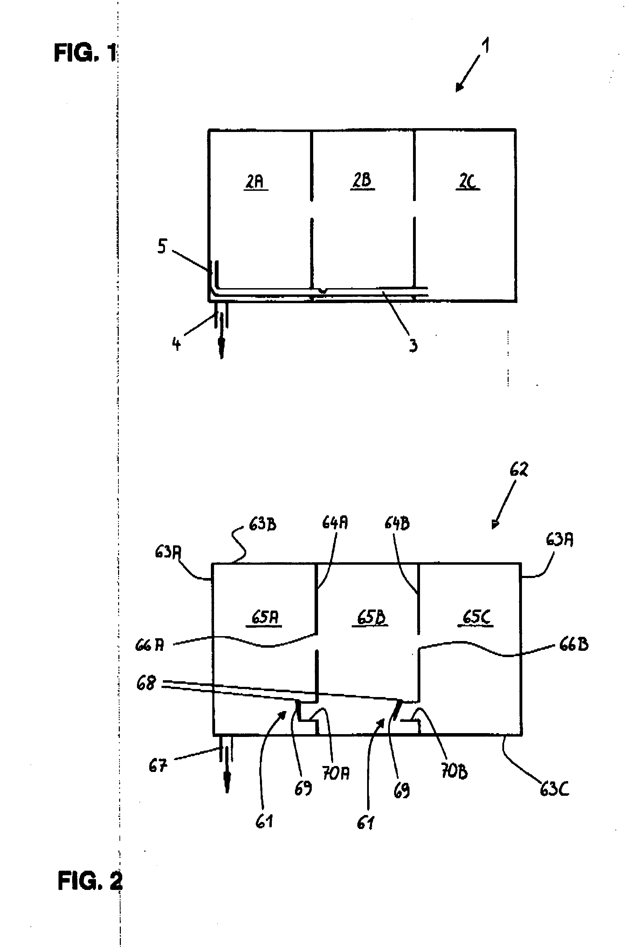

Um bei den Kraftstoffbehältern 1 mit mehreren Kammern 2A - 2C die Versorgung des Motors mit Kraftstoff zu gewährleisten, sind die Kammern 2A - 2C durch eine Rohrleitung 3 miteinander verbunden, wobei die Rohrleitung 3 so ausgebildet ist, dass der Kraftstoff in jene Kammer 2A gelangt, die über eine Kraftstoffleitung 4 mit dem Motor verbunden ist. Der Rückfluss von Kraftstoff von der Kammer 2A mit der Kraftstoffleitung 4 zum Motor in die andere(n) Kammer(n) 2B, 2C soll durch ein vertikales Endstück 5 verhindert werden (siehe Figur 1).

Der Nachteil dieses Aufbaus ist, dass die Unterbindung des Rückflusses von Kraftstoff von der Kammer mit der Kraftstoffleitung zum Motor in die andere (n) Kammer(n) zum Beispiel bei Schräglage unzuverlässig ist, so dass sich immer wieder größere Mengen an Kraftstoff in diesen Kammern sammeln. Dies kann Insbesondere bei geringer Betankung des Kraftfahrzeugs dazu führen, dass das Kraftfahrzeug nicht mehr betreibbar ist. Des Weiteren ist die Montage der Rohrleitung im Kraftstoffbehälter durch Verschweißen zeit- und kostenintensiv. Auch kann die Schweißnaht am Kraftstoffbehälter einreißen und somit der Kraftstoffbehälter undicht werden.

Es ist somit eine Aufgabe der vorliegenden Erfindung einen Kraftstoffbehälter zu schaffen, der diese Nachteile nicht aufweist.

Diese Aufgabe wird durch einen Kraftstoffbehälter für einen Flüssigkraftstoff mit zumindest zwei Kraftstoffkammern, die durch eine Zwischenwand getrennt sind, und einer in der Zwischenwand vorgesehenen Ventilvorrichtung zum gerichteten Durchfluss des im Kraftstoffbehälter enthaltenen Kraftstoffs von einer Kraftstoffkammer in die andere Kraftstoffkammer und zur Unterbindung eines Rückflusses in die Gegenrichtung gelöst (Anspruch 11).

Die Verwendung einer derartigen Ventilvorrichtung, insbesondere eines Steuerventils oder Regelventils, hat den Vorteil, dass durch die Ventilvorrichtung eine zuverlässige Verhinderung des Rückflusses von Kraftstoff von der Kammer mit der Kraftstoffleitung zum Motor in die andere(n) Kammer(n) gewährleistet ist. Auch ist der Einbau der kompakten und vergleichsweise kleinen Ventilvorrichtung in die Zwischenwand und den Kraftstoffbehälter einfacher durchzuführen als das Verschweißen einer langen Rohrleitung im Kraftstoffbehälter.

In einem Ausführungsbeispiel ist die Ventilvorrichtung als Klappventli ausgebildet. In einem bevorzugten Ausführungsbeispiel umfasst die Ventilvorrichtung ein Kugelventil. Die Verwendung eines Kugelventils vereint die Vorteile einer äußerst zuverlässigen Verhinderung des Rückflusses von Kraftstoff mit einer geringen Baugröße. Insbesondere ist das Kugelventil bevorzugt vollständig aus Metall, zum Beispiel aus Aluminium und Stahl, hergestellte Kugelventil widerstandsfähiger gegen Korrosion und weist eine längere Lebensdauer als ein Klappventil auf. Insbesondere ist die Kugel aus Stahl und der Ventilkörper aus Aluminium gefertigt.

Ein entsprechendes Verfahren zum Einbau einer Ventilvorrichtung in eine Zwischenwand eines Kraftstoffbehälters für einen Flüssigkraftstoff mit zumindest zwei Kraftstoffkammern, die durch die Zwischenwand getrennt sind, umfasst die Schritte:
- zur Verfügung stellen der Zwischenwand,
- zur Verfügung stellen einer Ventilvorrichtung,
- Verbinden der Ventilvorrichtung mit der Zwischenwand (Anspruch 13).

Bevorzugt weist die Zwischenwand eine Bohrung auf, in oder an der das Ventil befestigt wird. In einem anschließenden Schritt wird die Zwischenwand in den Kraftstoffbehälter eingefügt, zum Beispiel durch Verschweißen der Zwischenwand mit den Behälterwänden des Kraftstoffbehälters.

In einem Ausführungsbeispiel wird eine Ventilvorrichtung verwendet, die eine Ventilkammer mit einer Längsachse und einer Einlassöffnung, die exzentrisch zur Längsachse der Ventilkammer angeordnet ist, umfasst.

In einem anderen Ausführungsbeispiel wird die Drehlagenpositionierung der Ventilvorrichtung relativ zur Zwischenwand mittels zumindest eines Ausrichtelements festgelegt.

Aus der Patentschrift DE 40 20 830 C1 ist ein Ventil für einen Kraftstofftank eines Fahrzeuges bekannt. Das Ventil weist einen Ventilkörper, eine im Ventilkörper vorgesehenen Ventilkammer, zwei Einlassöffnungen und eine Auslassöffnung für den Kraftstoff, die mit der Ventilkammer verbunden sind, und in der Ventilkammer angeordnete Abspermittel auf. Die Absperrmittel bestehen aus einer Kugel und einem Käfig, die unter Einfluss der Schwerkraft oder von Trägheitskräften zwischen den beiden Einlassöffnungen bewegt werden, so dass jeweils eine Einlassöffnung verschlossen und die andere geöffnet ist.

Nachteilig bei diesem bekannten Ventil ist der mehrteilige und damit technisch aufwendige und kostspielige Aufbau der Absperrmittel des Ventils. Des Weiteren nehmen die Absperrmittel in der Ventilkammer viel Platz ein, wodurch der Volumenstrom des Kraftstoffs durch das Ventil verringert wird. Um größere Kraftstoffvolumenströme durch das Ventil leiten zu können, wäre es folglich nötig, die Ventilkammer und damit das gesamte Ventil zu vergrößern. Aufgrund der beengten Platzverhältnisse in einem Kraftstofftank ist dies jedoch nicht erwünscht.

Eine Aufgabe der vorliegenden Erfindung ist es daher, ein Ventil für eine Zwischenwand eines Kraftstoffbehälters für Flüssigkraftstoffe und einen Kraftstoffbehälter mit einem derartigen Ventil ohne die oben angeführten Nachteile zu schaffen. Insbesondere soll ein Ventil geschaffen werden, das für den Einbau in eine Zwischenwand eines Kraftstoffbehälters für Flüssigkraftstoffe geeignet ist und das den Durchfluss einer ausreichenden Menge an Kraftstoff bei gleichzeitig möglichst kompaktem und Platz sparendem Aufbau gewährleistet. Das Ventil soll bevorzugt auch einfach aufgebaut und kostengünstig herstellbar sein.

Diese Aufgabe wird durch ein Ventil für eine Zwischenwand eines Kraftstoffbehälter für Flüssigkraftstoff gelöst, das einen Ventilkörper, eine im Ventilkörper vorgesehenen Ventilkammer mit einer Längsachse, eine Einlassöffnung und eine Auslassöffnung, die beide mit der Ventilkammer verbunden sind, und ein in der Ventilkammer angeordnetes Rollelement umfasst. Das Rollelement ist durch die direkt oder indirekt darauf einwirkende Schwerkraft und / oder Trägheitskräfte und / oder durch einen vom Kraftstoff übertragenen Impuls zwischen der Einlass- und der Auslassöffnung bewegbar, so dass die Einlassöffnung durch das Rollelement verschließbar ist. Erfindungsgemäß ist die Einlassöffnung des Ventils exzentrisch zur Längsachse der Ventilkammer angeordnet (Anspruch 1).

Der Vorteil dieses Ventilaufbaus liegt darin, dass durch die exzentrisch und bevorzugt möglichst nahe an der Innenwand der Ventilkammer angeordnete Einlassöffnung für den Kraftstoff der Durchmesser des Rollelements deutlich geringer bemessen werden kann als der Innendurchmesser der Ventilkammer. Damit wird erreicht, dass in der Ventilkammer ausreichend Raum bzw. Volumen zum Durchsatz eines großen Volumenstroms des Kraftstoffs vorhanden ist. In einem Ausführungsbeispiel ist der Innendurchmesser der Ventilkammer um zumindest in etwa 10 %, bevorzugt um in etwa zumindest 20 %, größer als der Durchmesser des Rollelements. In einem besonders bevorzugten Ausführungsbeispiel ist der Innendurchmesser der Ventilkammer um zumindest in etwa ein Drittel größer als der Durchmesser des Rollelements, wobei der Innendurchmesser der Ventilkammer in etwa 20 mm und der Durchmesser des Rollelements in etwa 15 mm beträgt.

Ein weiterer Vorteil des erfindungsgemäßen Aufbaus liegt darin, dass das Rollelement selbst die Einlassöffnung verschließt und / oder abdichtet, so dass keine zusätzlichen Absperrmittel, wie zum Beispiel Käfige, vorzusehen sind. Das Rollelement ist bevorzugt so ausgebildet, dass es die Innenwand der Ventilkammer kontaktiert und daran entlang rollt, wenn der Kraftstoffbehälter oder das Kraftfahrzeug mit dem Kraftstoffbehälter verschwenkt werden und die Schwerkraft oder Trägheitskräfte auf das Rollelement einwirken. Das Rollelement besteht dabei aus einem Material, das schwerer ist als der Flüssigtreibstoff, zum Beispiel aus Metall, insbesondere aus Stahl. Ein zuverlässiger Verschluss der Einlassöffnung durch das Rollelement wird somit erfindungsgemäß nur erzielt, wenn die Einlassöffnung in der Ventilwand exzentrisch zur Längsachse der Ventilkammer angeordnet Ist, so dass das Rollelement sich an die Einlassöffnung anlagern kann und / oder darin eingreifen kann.

Wie bereits angeführt kann der Kraftstoffbehälter eine oder mehrere Zwischenwände aufweisen. Die Zwischenwände sind bevorzugt Metallplatten, die in gleichen oder ungleichen Abständen im Kraftstoffbehälter bzw. an den Behälterwänden befestigt sind, so dass der Kraftstoffbehälter in zwei oder mehrere gleich oder unterschiedlich große Kammern unterteilt ist.

Der Ventilkörper des Ventils ist bevorzugt zylindrisch geformt und weist einen zylindrischen Mantel und zwei, an den Enden des Mantels angeordnete, einander gegenüberliegende Seitenwände auf. Auch die Ventilkammer hat bevorzugt eine zylindrische Form mit einer zylindrischen Innenwand und zwei, an den Enden der Innenwand angeordnete, einander gegenüberliegende Innenseitenwände. In einem besonders bevorzugten Ausführungsbeispiel sind die Einlass- und die Auslassöffnung an den gegenüberliegenden Seitenwänden vorgesehen. Selbstverständlich ist es jedoch auch möglich, dass der Ventilkörper, die Ventilkammer und die Anordnung der Einlass und Auslassöffnung anders geformt bzw. angeordnet sind.

Wie bereits beschrieben ist die Einlassöffnung exzentrisch zur Längsachse der Ventilkammer, insbesondere in unmittelbarer Nähe zur Innenwand der Ventilkammer, angeordnet, damit sie durch das an der Innenwand entlang rollende Rollelement abdichtbar und / oder verschließbar ist. Unter einer exzentrischen Anordnung ist dabei nicht nur eine Parallelverschiebung der Mittelachse der Einlassöffnung in Bezug auf die Längsachse der Ventilkammer und / oder des Ventils zu verstehen, sondern auch eine gewinkelte Anordnung der beiden Achsen zueinander. So es auch möglich, dass die Einlassöffnung an der Innenwand der Ventilkammer bzw. am Mantel des Ventilkörpers vorgesehen ist.

Die Anordnung der Auslassöffnung für den Kraftstoff ist dagegen beliebig. Sie kann gemäß unterschiedlichen Ausführungsbeispilien zentrisch oder exzentrisch zur Längsachse der Ventilkammer und / oder des Ventilkörpers in einer der Seitenwände des Ventils vorgesehen sein, oder auch an der Innenwand der Ventilkammer bzw. am Mantel des Ventilkörpers.

In einem bevorzugten Ausführungsbeispiel sind die Mittelachsen der Einlassöffnung und der Auslassöffnung im Wesentlichen parallel, jedoch beabstandet zueinander angeordnet, insbesondere verläuft die Mittelachse der Auslassöffnung zentrisch zur Längsachse der Ventilkammer und / oder des Ventilkörpers. Damit wird in vorteilhafter Weise neben einer einfachen Herstellung des Ventilkörpers mit der Ventilkammer erreicht, dass der Verschluss der Austassöffnung durch das Rollelement zumindest erschwert wird und nur von kurzer Dauer Ist.

Das Rollelement, das bevorzugt als eine Kugel oder als ein annähernd kugelförmiger Körper ausgebildet ist, ist in der Ventilkammer frei beweglich bzw. drehbar aufgenommen. Die Ventilkammer und das Rollelement sind derart ausgebildet, dass das Rollelement durch einen vom Kraftstoff ausgeübten Impuls, der zum Beispiel beim Beschleunigen oder Bremsen des Kraftfahrzeugs durch die auf den Kraftstoff einwirkenden Trägheltskräfte ausgelöst wird, durch die direkt auf das Rollelement einwirkenden Trägheitskräfte oder durch die Schwerkraft, zum Beispiel wenn der Kraftstoffbehälter oder das Kraftfahrzeug mit dem Kraftstoffbehälter verschwenkt werden, bewegbar ist.

Das Verschließen der Einlassöffnung durch das Rollelement erfolgt durch Anlagern des Rollelements an und / oder zumindest teilweises Eingreifen des Rollelements in die Einlassöffnung, In einem Ausführungsbeispiel ist an der Einlassöffnung zur Verbesserung der Dichtwirkung zwischen dem Rollelement und der Einlassöffnung ein Dichtelement vorgesehen. Das Dichtelement umfasst zum Beispiel einen O-Ring, In einem bevorzugten Ausführungsbeispiel wird das Dichtelement oder die Abdichtung durch eine Abfasung an der Einlassöffnung gebildet. Diese Abfasung wird bevorzugt hergestellt, in dem das Rollelement gegen die Einlassöffnung gepresst wird, bis der Innenrand der Einlassöffnung und die angrenzende Ventilwand sich entsprechend der Form des Rollelements verformen. Die Abfasung kann plan oder abgerundet, insbesondere konkav sein. Der Vorteil dieser Ausgestaltung des Dichtelements besteht darin, dass keine separate Dichtung, insbesondere aus einem Material, das durch den Kraftstoff angegriffen wird, notwendig ist.

Die exzentrische Anordnung der Einlassöffnung erfordert einen exakten Einbau des Ventils in die Zwischenwand des Kraftstoffbehälters, um eine vollständige Abdichtung der Einlassöffnung durch das Rollelement zu erreichen. In einem Ausführungsbeispiel ist die exzentrische Einlassöffnung durch eine kreisrunde Bohrung in der Seitenwand des Ventils gebildet. Bevorzugt ist beim Einbau des Ventils jener Punkt oder Abschnitt am Außenumfang der kreisrunden Bohrung, der am weitesten von der Längsachse der Ventilkammer und / oder des Ventilkörpers entfernt ist, am tiefsten von allen am Außenumfang der kreisrunden Bohrung vorhandenen Punkten anzuordnen, d.h. dieser Punkt soll sich bei dem in der Zwischenwand montierten Ventil am nächsten zum Kraftstoffbehälter- oder Erdboden befinden. Dieser Punkt oder Abschnitt liegt gleichzeitig auch am nächsten zur Innenwand der Ventilkammer und ist insbesondere in unmittelbarer Nähe zur Innenwand der Ventilkammer vorgesehen. Durch diesen Aufbau kann der Durchmesser des Rollelements möglichst klein bemessen werden, so dass In der Ventilkammer mehr Platz für den Durchfluss des Kraftstoffs vorhanden ist. Durch diesen Aufbau wird auch sichergestellt, dass das an der Innenwand der Ventilkammer rollende Rollelement problemlos und zuverlässig in die Einlassöffnung eingreift und diese verschließt.

Um dem Monteur die exakte Ausrichtung des Ventils in der Zwischenwand zu erleichtern, ist in einem bevorzugten Ausführungsbeispiel ein Ausrichtelement zur Drehlagenpositionierung des Ventils relativ zur Zwischenwand vorgesehen. Das Ausrichtelement ist am Ventilkörper, bevorzugt an der Außenseite des Ventilmantels oder der Seitewände vorgesehen.

In einem Ausführungsbeispiel ist das Ausrichtelement als Markierung, zum Beispiel als optische Markierung in Form einer Farbmarkierung oder als Einstich am Ventil, ausgebildet. Die Markierung zeigt dem Monteur während der Montage auf einfache und gut erkennbare Weise, ob der Punkt oder der Abschnitt am Außenumfang der kreisrunden Bohrung, der am weitesten von der Längsachse der Ventilkammer entfernt ist, am tiefsten von allen am Außenumfang der kreisrunden Bohrung vorhandenen Punkten angeordnet ist. Dies kann zum Beispiel dadurch erfolgen, dass die Markierung am Ventil mit einer zweiten Markierung auf der Zwischenwand in Deckung gebracht oder daran anschließend angeordnet werden muss.

In einem anderen, bevorzugten Ausführungsbeispiel umfasst das Ausrichtelement ein Passelement, dass das Ventil beim Einbau in die richtige Drehlagenposition einpasst bzw. durch das der Einbau des Ventils nur in der korrekten Drehlagenposition möglich ist. In einem besonders bevorzugten Ausführungsbeispiel ist auch an der Zwischenwand ein Ausrichtelement, zum Beispiel ein Passelement, vorgesehen, das zum Beispiel komplementär zum Ausrichtelement des Ventils geformt ist, so dass der korrekte Einbau des Ventils in die Zwischenwand nur möglich ist, wenn die beiden Ausrichtelemente / Passelemente passend zueinander oder ineinander eingreifend angeordnet sind. Das Passelement der Ausrichtvorrichtung und der Gegen - Ausrichtvorrichtung kann zum Beispiel eine Nut, eine Planfläche, ein Vorsprung oder ein Rücksprung umfassen. Der Vorteil dieses Ausführungsbeispiels liegt in der automatischen, korrekten Anordnung des Ventils ohne Zutun des Monteurs.

In einem weiteren Ausführungsbeispiel um fasst das Ventil ein, insbesondere am Außenmantel des Ventilkörpers angeordnetes, Verbindungselement zur Verbindung des Ventils mit der Zwischenwand. Die Anordnung am Außenmantel, insbesondere in jenem Bereich des Außenmantels, der in etwa die Ventilkammer umgibt, in der der Rollkörper aufgenommen ist, hat den Vorteil einer besonders kompakten Ausbildung des Ventils.

In einem bevorzugten Ausführungsbeispiel ist der Ventilkörper zweiteilig aufgebaut und umfasst ein Ventilgehäuse und einen Ventildeckel, wobei das Verbindungselement im Anschlussbereich der beiden Ventilkörperteile oder zwischen den beiden Ventilkörperteilen vorgesehen ist. Die gemeinsame Ausformung des Verbindungselements und des Anschlussbereichs ermöglicht insbesondere eine kostengünstigere Herstellung des Ventils.

Besonders bevorzugt ist das Verbindungselement durch eine Vertiefung im Mantel des Ventilkörpers, zum Beispiel durch eine Nut oder einen Bund, zum Einfügen eines Teils der Zwischenwand gebildet, so dass beim Zusammenfügen der beiden Ventilteile die Zwischenwand in der Nut oder an dem Bund eingefügt, insbesondere geklemmt, wird. Der Bund ist zum Beispiel durch Flansche und / oder Schultern an den Ventilkörperteilen gebildet. Dieser Aufbau des Ventils vereinfacht und verkürzt die Montage des Ventils an der Zwischenwand, da beim Zusammenfügen der beiden Ventilteile gleichzeitig das Ventil auch an der Zwischenwand befestigt wird.

Zur Abdichtung zwischen den Kammern des Kraftstoffbehälters ist im Bereich des Verbindungselements ein Dichtelement, zum Beispiel ein O-Ring oder eine runde Flachdichtung mit Bohrung, vorgesehen. Das Dichtelement ist bevorzugt so ausgebildet und / oder angeordnet, dass es auch die Schnittstelle der beiden Ventilteile abdichtet. Alternativ kann dafür auch ein separates Dichtelement vorgesehen sein.

In einem weiteren bevorzugten Ausführungsbeispiel ist das Ausrichtelement am Verbindungselement angeordnet oder als Teil des Verbindungselements ausgebildet. Dies vereinfacht und verkürzt die Montage des Ventils an der Zwischenwand zusätzlich, da in einem Arbeitsschritt die beiden Ventilteile zusammengefügt, das Ventil an der Zwischenwand befestigt und die korrekte Drehlagenpositionierung des Ventils eingenommen wird. Insbesondere ist das Verbindungselement durch eine Vertiefung im Mantel des Ventilkörpers, zum Beispiel durch einen den Ventilkörper ringförmig umgebenden Bund, ausgebildet, wobei das Ausrichtelement eine kurze Planfläche im ringförmigen Bund umfasst. In der Zwischenwand ist bevorzugt ebenfalls ein Planfläche derselben Länge vorgesehen, so dass, um das Einfügen des Ventils in die Zwischenwand zu ermöglichen, die beiden Planflächen aneinander gefügt werden müssen.

In einem Ausführungsbeispiel weisen die Einlass- und die Auslassöffnung unterschiedliche Innendurchmesser auf. In einem bevorzugten Ausführungsbeispiel beträgt der Innendurchmesser der Einlassöffnung etwa 12 mm, der Innendurchmesser der Auslassöffnung etwa 14 mm. Die größer ausgeführte Auslassöffnung hat den Vorteil, dass der Volumenstrom des Kraftstoffs durch das Ventil möglichst konstant oder zumindest möglichst hoch gehalten wird, selbst wenn das Rollelement nahe der Auslassöffnung liegt, so dass es Teile der Auslassöffnung abdeckt oder abschirmt, ohne diese jedoch zu verschließen.

In einem weiteren Ausführungsbeispiel ist eine Lauffläche für das Rollelement vorgesehen, wobei die Einlassöffnung und die Auslassöffnung unterschiedlich weit von der Lauffläche entfernt sind. Durch diese Anordnung wird in vorteilhafter Weise erreicht, dass der Verschluss der Auslassöffnung durch das Rollelement deutlich erschwert wird. Es werden dadurch auch optimierte Strömungsverhältnisse für den das Ventil durchströmenden Flüssigkraftstoff erzielt.

Die Lauffläche ist bevorzugt durch eine Rinne oder Nut gebildet, in der das Rollelement zumindest teilweise aufgenommen und / oder darin geführt wird. Durch die Ausbildung der Lauffläche wird eine gewisse Stabilität und Führung erzielt, so dass auch bei Erschütterungen des Ventils eine zuverlässige Bewegungsbahn undleitung für das Rollelement gegeben und damit ein zuverlässiger Verschluss der Einlassöffnung garantiert sind.

In einem Ausführungsbeispiel Ist eine Rückhaltevorrichtung für das Rollelement zur Verhinderung des Verschlusses der Auslassöffnung durch das Rollelement vorgesehen. Der Verschluss der Auslassöffnung durch das Rollelement kann zu einer Unerwünschten Unterbrechung des Durchflusses des Kraftstoffes führen. Bevorzugt umfasst die Rückhaltevorrichtung , einen Käfig, einen Anschlag oder eine Schulter, die vor der Auslassöffnung angeordnet sind, oder eine andere Vorrichtung, die so ausgebildet ist, dass zumindest ein dichtendes Anlagern des Rollelements an und / oder ein zumindest teilweises Eingreifen des Rollelements in die Einlassöffnung verhinderbar ist.

Ein weiterer Vorteil der Verwendung einer Rückhaltevorrichtung für das Rollelement besteht darin, dass die Einlass- und die Auslassöffnung einander gegenüberliegend, zum Beispiel mit koaxialer Mittelachse oder gleich weit von der Lauffläche des Rollelements angeordnet werden können, wodurch der Herstellungsaufwand für den Ventilkörper verringert wird.

Wie weiter oben schon detailliert beschrieben, erfordert die exzentrische Anordnung der Einlassöffnung einen exakten Einbau des Ventils in die Zwischenwand des Kraftstoffbehälters, um eine vollständige Abdichtung der Einlassöffnung durch das Rollelement zu erreichen. Eine weitere Aufgabe der vorliegenden Erfindung ist es daher, Mittel zur Verfügung zu stellen, die einen derartigen exakten Einbau erleichtern.

Diese Aufgabe wird durch eine Ausrichtvorrichtung zur Drehlagenpositionierung eines Ventils relativ zur Zwischenwand eines Kraftstoffbehälters für Flüssigkraftstoff gelöst, wobei das Ventil und die Zwischenwand direkt oder indirekt miteinander verbindbar sind, ein Ventil mit einer exzentrisch zur Längsachse der Ventilkammer angeordneten Einlassöffnung und zumindest ein Ausrichtelement vorgesehen sind (Anspruch 8).

Das zumindest eine Ausrichtelement ist, wie weiter oben schon beschrieben, an dem Ventil oder an der Zwischenwand vorgesehen. Selbstverständlich kann jedoch auch zumindest je ein Ausrichtelement am Ventil und an der Zwischenwand vorhanden sein. Das zumindest eine Ausrichtelement umfasst in einem bevorzugten Ausführungsbeispiel eine Markierung und / oder ein Passelement.

Die Erfindung wird im Folgenden anhand mehrerer bevorzugter Ausführungsbeispiele und Bezug nehmend auf die beigefügten Zeichnungen erläutert:
Fig. 1 zeigt eine schematische Darstellung eines Kraftstoffbehälters, wie er aus dem Stand der Technik bekannt ist.
Fig. 2 zeigt ein erstes Ausführungsbeispiel eines erfindungsgemäßen Kraftstoffbehälters mit einem Klappventil.
Fig. 3 zeigt ein Kraftfahrzeug mit einem zweiten Ausführungsbeispiel eines erfindungsgemäßen Kraftstoffbehälters mit einem Kugelventil bei der Bergauffahrt oder -positionierung, wobei der Kraftstoffbehälter zusätzlich vergrößert dargestellt ist.
Fig. 4 zeigt die vergrößerte Darstellung des Kraftstoffbehälters der Figur 3 bei der Bergabfahrt oder -positionierung.
Fig. 5 zeigt eine Ausführungsform eines erfindungsgemäßen Kugelventils in geöffnetem Zustand, so dass Kraftstoff durch das Ventil fließt.
Fig. 6 das Kugelventil der Figur 5 in geschlossenem Zustand, so dass der Kraftstofffluss durch das Ventil unterbrochen ist.

Der in Figur 2 dargestellte Kraftstoffbehälter 62 weist eine in etwa rechteckige Form mit sechs Außenwänden auf, wobei vier der Außenwände als Seitenwände 63A und je eine Außenwand als Oberwand 63B bzw. als Boden- oder Unterwand 63C dienen. Selbstverständlich kann der Kraftstoffbehälter jedoch auch andere, zum Beispiel sattelförmige, Außenformen aufweisen. Der Kraftstoffbehälter 62 ist zur Aufnahme und Lagerung von Flüssigkraftstoffen, wie zum Beispiel Diesel oder Benzin, jedoch auch von verflüssigten Gasen geeignet.

Der Kraftstoffbehälter 62 ist durch zwei in seinem Inneren angeordnete Zwischenwände 64A, 64B in drei aneinander grenzende, in etwa gleich große Kammern 65A, 65B, 65C unterteilt. Die Kammern 65A, 65B, 65C sind durch zwei Öffnungen oder Bohrungen 66A, 66B miteinander verbunden. Über diese Öffnungen 66A, 66B, die in der oberen, d.h. der Oberwand 63B näheren, Hälfte der Zwischenwände 64A, 64B angeordnet sind, fließt der Kraftstoff, solange der Kraftstoffspiegel mindestens so hoch wie die Unterkante der Öffnungen 66A, 66B Ist. Dies ist zum Beispiel beim Betanken des Kraftstoffbehälter 62 der Fall, oder wenn der Kraftstoffbehälter 62 entsprechend hoch gefüllt ist.

Von der Kammer 65A wird einem Motor über eine Kraftstoffleitung 67 Kraftstoff zugeführt. Der dem Motor zugeführte Kraftstoff stammt somit ausschließlich aus der Kammer 65A, wobei Kraftstoff aus den beiden Kammern 65B, 65C über die Öffnungen 66A; 66B und über ebenfalls an den Zwischenwänden 64A, 64B vorgesehene Ventilvorrichtungen in die Kammer 65A nachfließt, solange der Kraftstoffspiegel über der Unterkante der Öffnungen 66A, 66B liegt. Sinkt der Kraftstoffspiegel unter die Unterkante der Öffnungen 66A, 66B, so erfolgt der Kraftstoffnachschub von den Kammern 65B, 65C in die Kammer 65A ausschließlich über je eine Ventilvorrichtung zwischen den Kammern 65A und 65B bzw. 65B und 65C.

Die Ventilvorrichtungen sind im unteren, d.h. dem der Unterwand 63C näheren, Viertel bevorzugt im unteren Sechstel, der Zwischenwände 64A, 64B angeordnet. Besonders bevorzugt sind sie möglichst nahe der Unterwand 63C vorgesehen, um auch bei sehr geringem Befüllungsstand des Kraftstoffbehälters 62 den Kraftstoff in Richtung der Kammer 65A weiterzuleiten.

In der Ausführungsform gemäß Figur 2 ist die Ventilvorrichtung als Klappventil 61 ausgebildet, das direkt an der Zwischenwand 64A, 64B oder an einem davon abstehenden Rohrstutzen angebracht ist. Das Klappventil 61 verschließt die Öffnungen 70A, 70B nahe der Unterwand 63C bzw. gibt diese Öffnungen 70A, 70B frei. Das Klappventil 61 umfasst eine Befestigungsvorrichtung zur Befestigung an der Zwischenwand 64A, 64B, zum Beispiel eine Leiste mit mehreren Bohrungen, die von Schrauben durchsetzbar sind, so dass die Leiste an der Zwischenwand 64A, 64B verschraubbar ist. An die Leiste schließt eine Schwenkachse 68 an, an der eine Verschlussklappe oder ein Verschlussdeckel 69 beweglich, insbesondere verschwenkbar, befestigt ist. Die Verschlussklappe 69 und / oder die Zwischenwand 64A, 64B weisen bevorzugt zumindest ein Dichtelement zur zuverlässigen Abdichtung der einzelnen Kammern 65A, 65B, 65 C auf.

Das Öffnen und Schließen der Klappventile 61 und damit die Förderung des Kraftstoffs durch die Klappventile 61 erfolgt durch auf die Klappventile 61 und insbesondere auf die Verschlussdeckel 69 wirkende externe Kräfte. Bei diesen externen Kräften handelt es sich zum Beispiel um die Schwerkraft, die auf den Verschlussdeckel 69 direkt und auf den Kraftstoff wirkt, wenn der verschwenkbar ausgebildete oder angeordnete Kraftstoffbehälter 62 verschwenkt wird. Dies erfolgt zum Beispiel bei einer Bergabfahrt oder Bergauffahrt des Fahrzeugs, an dem der Kraftstoffbehälter 62 befestigt ist.

Schwenkt in dem dargestellten Ausführungsbeispiel nach Figur 2 der Kraftstoffbehälter 62 in Richtung der Leitung 67, so rinnt der Kraftstoff in den Kammern 65B, 65C aufgrund der auf ihn einwirkenden Schwerkraft in Richtung der Leitung 67 und somit an die Rückseite der Klappventile 61. Die Klappventile 61 öffnen sich aufgrund des durch den Kraftstoff auf sie ausgeübten Drucks, so wie dies schematisch in Figur 2 für das Klappventil 61 zwischen den Kammern 65B und 65C dargestellt ist. Damit sind die Öffnungen 70A, 70B frei und der Kraftstoff kann in Richtung der Leitung 67 und in die Kammer 65A fließen. Gleichzeitig wirkt die Schwerkraft auch direkt auf die Verschlussdeckel 69 selbst, wodurch die Öffnung der Klappventile 61 ebenfalls bewirkt wird.

Schwenkt der Kraftstoffbehälter 62 in die Gegenrichtung, so fließt der Kraftstoff von der Leitung 67 weg und drückt auf die Vorderseite der Klappventile 61. Aufgrund dieses auf sie ausgeübten Drucks und gleichzeitig auch wieder aufgrund der direkt auf sie einwirkenden Schwerkraft verschließen die Klappventile 61 die Öffnungen 70A, 70B, so wie dies schematisch in Figur 2 für das Klappventil 61 zwischen den Kammern 65A und 65B dargestellt ist. Dadurch wird ein Rückfluss von Kraftstoff in die Kammern 65B, 65C wirkungsvoll verhindert.

Neben der Schwerkraft können auch die Trägheitskräfte direkt oder indirekt auf die Klappventile 61 einwirken und das Öffnen und Schließen der Klappventile 61 wie oben beschrieben auslösen. Indirekte Trägheitskräfte können zum Beispiel beim Beschleunigen oder Bremsen des Kraftfahrzeugs, an dem der Kraftstoffbehälter 62 befestigt ist, auftreten und den Kraftstoff in den Kammern 65A - C in Bewegung versetzen. Trifft der in Bewegung versetzte Kraftstoff auf die Klappventile 61, so übt er auf die Klappventile 61 einen Impuls aus, der, in Abhängigkeit der Richtung des Impulses, die Klappventile 61 und die Öffnungen 70a, 70B öffnet oder verschließt.

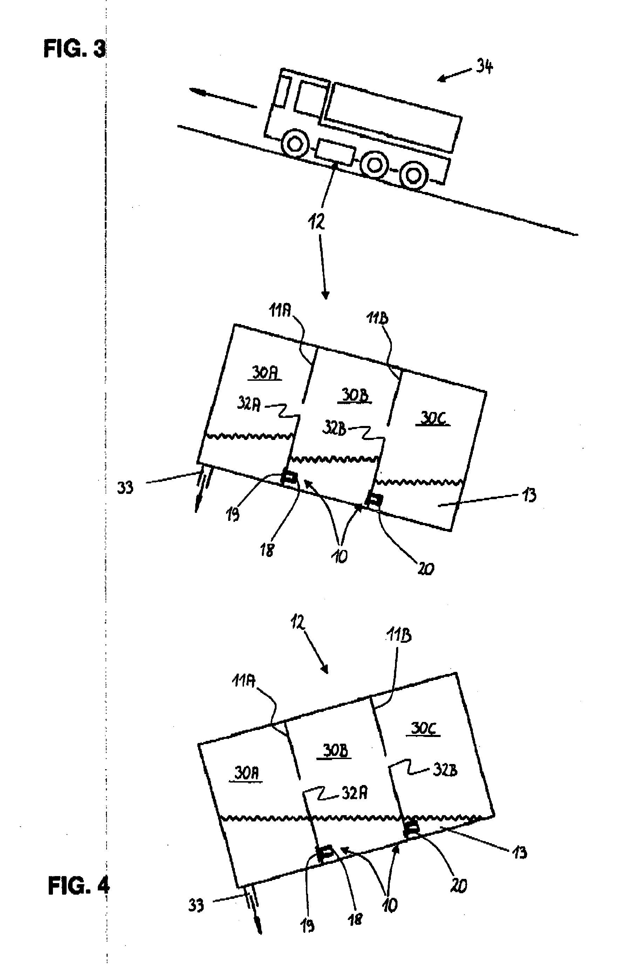

Die Figuren 3 und 4 zeigen ein anderes Ausführungsbeispiel eines Kraftstoffbehälters mit dem Bezugszeichen 12. Der grundlegende Aufbau des Kraftstoffbehälters 12 gleicht jenem des Kraftstoffbehälters 62, so dass dieser nicht noch einmal im Detail beschrieben wird. Der Kraftstoffbehälter 12 weist wiederum drei Kammern 30A, 30B, 30C auf, die wiederum durch zwei Zwischenwände 11A, 11 B mit den Öffnungen 32A, 32B voneinander getrennt sind. Im Kraftstoffbehälter 12 ist des Weiteren ein Flüssigkraftstoff 13 eingefüllt, dessen Flüssigkeitsspiegel unter der Unterkante der Öffnungen 32A, 32B liegt. Aus der Kammer 30A führt eine Kraftstoffleitung 33 zu einem Motor.

Der Kraftstoffbehälter 12 unterscheidet sich vom Kraftstoffbehälter 62 in der Art der darin verbauten Ventilvorrichtung, die als Kugelventil 10 ausgebildet ist. Das Kugelventil 10 weist ein Rollelement 20, das frei beweglich im Kugelventil 10 aufgenommen ist, sowie eine Einlassöffnung 18 und eine Auslassöffnung 19 für den Kraftstoff 13 auf. Die Einlassöffnung 18 ist durch das Rollelement 20 verschließbar. Damit sind die Kammern 30A - C durch die Kugelventile 10 verbunden, wobei der Kraftstoff 13 in Richtung der Kraftstoffleitung 33 in die Kammer 30A fließen kann und der Rückfluss in die Kammern 30B, 30C unterbunden wird.

Wie aus den Figuren 3 und 4 zu erkennen ist, ist der Kraftstoffbehälter 12 verschwenkbar ausgebildet bzw. angeordnet, zum Beispiel an einem Lastkraftwagen 34 oder an einem anderen beliebigen Fahrzeug. Die Verschwenkung des Kraftstoffbehälters 12 kann zum Beispiel bei einer Bergauffahrt oder Bergaufpositionierung des Fahrzeugs erfolgen, so wie dies in Figur 3 dargestellt ist. In dieser Stellung oder bei dieser Neigung rollt das Rollelement 20, angetrieben durch externe Kräfte, insbesondere durch die direkt und indirekt auf das Rollelement 20 wirkende Schwerkraft, innerhalb der Ventilkammer des Ventils 10 in Richtung der Einlassöffnung 18 und lagert sich an die Einlassöffnung 18 an bzw. ragt teilweise in sie hinein, so dass die Einlassöffnung 18 durch das Rollelement 20 verschlossen ist. Trotz der Neigung des Kraftstoffbehälters 12 kann der Kraftstoff 13 nun nicht in die tiefer gelegenen Kammern 30B, 30C fließen. Auf diese Weise wird insbesondere eine unerwünschte Entleerung der Kammer 30A verhindert, wodurch die Versorgung des Motors mit Kraftstoff über die Leitung 33 bei einer Verschwenkung des Kraftstoffbehälters 12 in Richtung der Kammer 30C gesichert ist.

In der Figur 4 ist die Verschwenkung des Kraftstoffbehälters 12 in die Gegenrichtung, d.h. in Richtung der Kraftstoffleitung 33, dargestellt, wie sie zum Beispiel bei einer Bergabfahrt oder Bergabpositionierung des Lastkraftwagens 34 eintritt. Bei einer derartigen Vorwärtsneigung rollt das Rollelement 20, angetrieben durch externe Kräfte, insbesondere durch die direkt und indirekt auf das Rollelement 20 wirkende Schwerkraft, innerhalb der Ventilkammer des Ventils 10 in Richtung der Auslassöffnung 19, ohne diese jedoch zu verschließen oder abzudichten. Die Verhinderung des Verschlusses der Auslassöffnung 19 wird zum Beispiel durch eine Rückhaltevorrichtung für das Rollelement 20 erzielt, zum Beispiel durch einen Käfig oder eine Schulter, so dass sich das Rollelement 20 nicht an die Auslassöffnung 19 anlagern kann. Alternativ wird der Verschluss der Auslassöffnung 19 durch ein definierte Ausformung oder Anordnung der Auslassöffnung 19 erzielt, so dass das Rollelement 20 die Auslassöffnung 19 nicht vollständig verschließt oder diese aufgrund der Anordnung im Ventil zumindest nicht vollständig erreicht oder abdichtet.

Aufgrund der Neigung des Kraftstoffbehälters 12 und der geöffneten Ventile 10 fließt der Kraftstoff 13 von den Kammern 30C, 30B in die Kammern 30A, 30B, wodurch insbesondere ein Nachschub von Kraftstoff 13 in die Kammer 30A, zur Kraftstoffleitung 33 und somit zum Motor gewährleistet ist.

Wie bereits für den Kraftstoffbehälter 62 und die Klappventile 61 beschrieben, können der Öffnungs- und Verschließvorgang und somit die Lageveränderung des Rollelements 20 auch durch andere Kräfte, insbesondere durch Trägheitskräfte beim Bremsen oder Beschleunigen des Kraftfahrzeugs, bewirkt werden. Die Ventile 10 und 61 sind somit derart ausgebildet, dass ein Nachschub von Kraftstoff 13 auch ohne Verschwenken der Kraftstoffbehälter 12, 62 möglich ist.

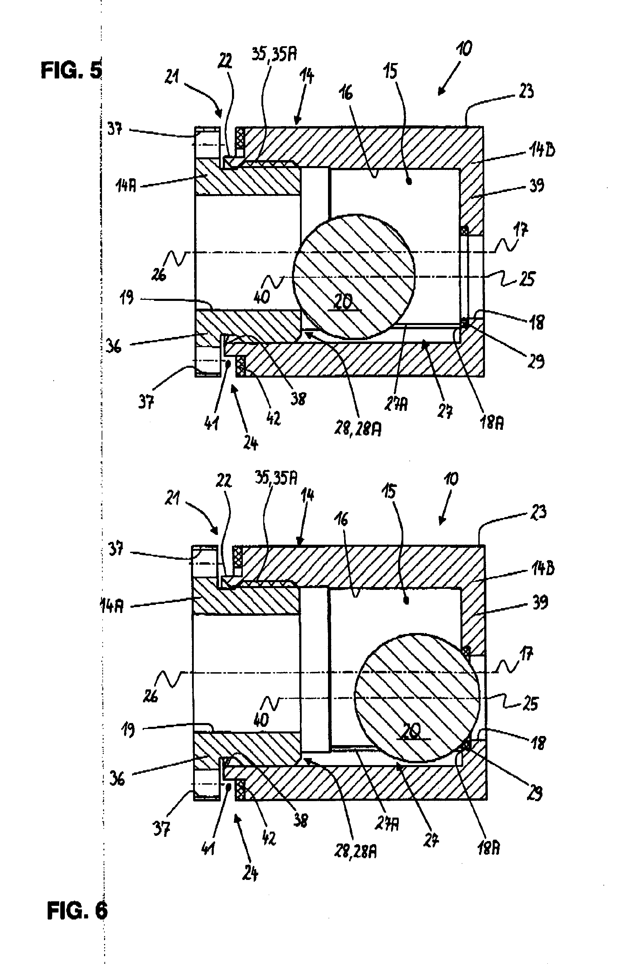

Die Figuren 5 und 6 zeigen ein bevorzugtes Ausführungsbeispiel eines Kugelventils 10, das besonders geeignet zum Einbau in eine Zwischenwand eines Kraftstoffbehälters, zum Beispiel des Kraftstoffbehälters 12, ist.

Das Kugelventil 10 umfasst einen Ventilkörper 14, der zweiteilig aufgebaut ist und aus dem Ventilgehäuse 14B und dem Ventildeckel 14A besteht. Selbstverständlich kann der Ventilkörper auch aus mehr als zwei Teilen bestehen. Das Ventilgehäuse 14B und der Ventildeckel 14A sind im Anschlussbereich über eine lösbare Anschlussvorrichtung 35, zum Beispiel über ein Gewinde 35A, miteinander verbunden.

Der Ventildeckel 14A ist als hohlzylindrisches Bauteil ausgebildet, wobei die ebenfalls zylindrische Innenbohrung des Ventildeckels 14A als Auslassöffnung 19 des Ventils 10 dient und sich von einem ersten Ende des Ventildeckels 14A bis zu einem zweiten Ende des Ventildeckels 14A erstreckt. An der dem Ventilgehäuse 14B abgewandten Seite des Ventildeckels 14A ist ein Flansch 36 vorgesehen, dessen Außendurchmesser in etwa dem Außendurchmesser des Ventilgehäuses 14B entspricht, wohingegen der Durchmesser des restlichen Ventildeckels 14A in etwa dem Innendurchmesser der Ventilkammer 15 des Ventilgehäuses 14B entspricht, so dass zumindest ein Teil des Ventildeckels 14A mit dem geringeren Innendurchmesser in die Ventilkammer 15 einfügbar ist. Am Außenrand des Flansches 36 sind zumindest zwei Längsbohrungen 37 angeordnet, in die für die Befestigung des Ventils 10 an der Zwischenwand des Kraftstoffbehälters Montagewerkzeuge eingreifen.

Das Ventilgehäuse 14B weist einen zylindrisch geformten Außenmantel 23 und eine Innenbohrung auf, die ebenfalls zylindrisch ausgebildet ist und die als Ventilkammer 15 dient. Die Ventilkammer 15 weist eine erste, größere Öffnung 38, die sich an dem dem Ventildeckel 14A zugewandten Ende des Ventilgehäuses 14B befindet, und eine zweite kleiner Öffnung auf. Durch die im Anschlussbereich für den Ventildeckel 14A und das Ventilgehäuse 14B angeordnete größere Öffnung 38 wird ein Teil des Ventildeckels 14A in das Ventilgehäuse 14B eingefügt. An die Öffnung 38 anschließend und somit in der Ventilkammer 15 befindet sich das Gewinde 35A zur Verbindung des Ventildeckels 14A mit dem Ventilgehäuses 14B.

Die zweite Öffnung dient als Einlassöffnung 18 des Ventils 10 und ist in einer Seitenwand 39 des Ventils 10, gegenüber der Öffnung 38 und der Auslassöffnung 19 angeordnet. Die Einlassöffnung 18 hat einen kleineren Innendurchmesser als die Öffnung 38 und die Auslassöffnung 19. Die Einlassöffnung 18 ist exzentrisch zur Längsachse 17 der Ventilkammer 15 angeordnet, so dass die Mittelachse 25 der Einlassöffnung 18 von der Längsachse 17 und der Mittelachse 26 der Auslassöffnung 19 beabstandet ist. Im Gegensatz dazu ist die Auslassöffnung 19 zentrisch mit der Längsachse 17 der Ventilkammer 15 ausgebildet, so dass die Mittelachse 26 der Auslassöffnung 19 und die Längsachse 17 einander überlagern. Die Einlassöffnung 18 ist in unmittelbarer Nähe zur Innenwand 16 der Ventilkammer 15 angeordnet. Sie grenzt jedoch nicht direkt an die Innenwand 16 an, sondern ist zumindest durch ein kleines Stück der Seitenwand 39 von der Innenwand 16 getrennt.

Die Einlassöffnung 18 weist zwei Teilabschnitte mit unterschiedlichen Innendurchmessern auf, wobei der Bereich mit dem größeren Innendurchmesser näher zur Ventilkammer 15 angeordnet ist bzw. direkt an diese angrenzt. In diesem Bereich mit dem größeren Innendurchmesser ist ein Dichtelement 29 vorgesehen, zum Beispiel in Form eines O-Rings. Alternativ ist das Dichtelement durch eine Abfasung gebildet, deren Form und Größe an das Rollelement 20 angepasst ist.

Wie bereits beschrieben Ist in der Ventilkammer 15 ein Rollelement 20 frei beweglich aufgenommen, wobei das Rollelement 20 durch den direkten oder indirekten Einfluss der Schwerkraft, von Trägheitskräften und / oder eines von einem Medium, insbesondere von einem Kraftstoff, übertragenen Impulses antreibbar ist. Das Rollelement 20 ist bevorzugt als rotationssymmetrischer Körper, insbesondere als Kugel ausgebildet, so dass es sich zwischen der Einlassöffnung 18 und der Auslassöffnung 19 frei bewegen kann. Die Bewegung des Rollelements 20 erfolgt bevorzugt auf einer Lauffläche 27, die in der Ventilkammer 15, an der Innenwand 16 oder als Teil der Innenwand 16, angeordnet ist. Die Lauffläche 27 ist bevorzugt durch eine Rinne oder Nut gebildet, in der das Rollelement 20 zumindest teilweise aufgenommen und / oder darin geführt wird. Durch die Ausbildung der Lauffläche 27 wird eine gewisse Stabilität und Führung für das Rollelement 20 erzielt, insbesondere wenn das Rollelement 20 in Bewegung ist bzw. wenn das Bauteil, an dem das Ventil 10 befestigt ist, zum Beispiel eine Zwischenwand eines Kraftstoffbehälters, bewegt oder verschwenkt wird.

In einem bevorzugten Ausführungsbeispiel weist die Lauffläche 27 zwei einander gegenüberliegende Schienen oder Leisten 27A auf (in den Schnittdarstellungen der Figuren 5 und 6 ist jeweils nur eine Leiste 27A dargestellt), zwischen denen das Rollelement 20 aufgenommen ist. Die Leisten 27A sind dabei so in der Ventilkammer 15 angeordnet und so voneinander beabstandet, dass das Rollelement 20 Im Wesentlichen nur die Leisten 27A, jedoch nicht die Innenwand 16 der Ventilkammer 15, Insbesondere nicht jenen Abschnitt der Innenwand 16, der sich unterhalb des Rollelements 20 befindet, berührt. Dadurch kann In vorteilhafter Weise Kraftstoff unterhalb des Rollelements 20 durchfließen bzw. Kraftstoff das Rollelement 20 im Wesentlichen vollständig umströmen, so dass Partikel oder Verunreinigungen, die sich an oder auf der Lauffläche 27 absetzen, mitgerissen werden, wodurch die Verwendbarkeit und präzise Funktion des Ventils 10 für längere Zeit aufrecht erhalten werden können.

Das Rollelement 20 ist zentrisch zur Einlassöffnung 18 angeordnet, so dass die Mittelachse 25 der Einlassöffnung 18 und die Mittelachse 40 des Rollelements 20 einander überlagern, jedoch exzentrisch zur Auslassöffnung 19. Das Rollelement 20 ist so bemessen und geformt, dass es zumindest teilweise in die Einlassöffnung 18 eingreift oder sich daran anlagert, so dass die Einlassöffnung 18 verschlossen ist und kein Medium durch die Einlassöffnung 18 fließt.

Im Gegensatz dazu ist die Auslassöffnung 19 derart angeordnet oder ausgebildet, dass sie durch das Rollelement 20 nicht oder nur erschwert verschließbar ist Dies wird zum Beispiel durch eine versetzte Anordnung der Auslassöffnung 19 in Bezug auf das Rollelement 20 erreicht, wodurch die Mittelachse 40 des Rollelements 20 und die Mittelachse 26 der Auslassöffnung 19 beabstandet voneinander vorliegen. Dies wird auch durch eine Rückhaltevorrichtung 28 erreicht, die verhindert, dass das Rollelement 20 sich an die Auslassöffnung 19 anlagert und / oder darin eingreift und diese verschließt und abdichtet. Die Rückhaltevorrichtung 28 gemäß Figur 5 ist als Anschlag 28A oder stufenförmige Schulter ausgebildet, deren Höhe derart gewählt ist, dass das Rollelement 20 sie nicht oder nur schwer überwinden kann. Der Anschlag 28A wird insbesondere von dem als Planfläche ausgebildeten zweiten Ende des Ventildeckels 14A gebildet. Die Rückhaltevorrichtung 28 kann jedoch auch von anderen Bauteilen gebildet sein und / oder anders ausgeformt sein.

Liegt das Rollelement 20 an der Rückhaltevorrichtung 28 an, so wie dies in Figur 5 dargestellt ist, oder ist das Rollelement 20 zumindest von der Einlassöffnung 18 entfernt, so ist das Ventil 10 geöffnet und kann von einem Medium, insbesondere von einem Kraftstoff, durchflossen werden. Aufgrund der versetzten Anordnung des Rollelements 20 zur Auslassöffnung 19 und aufgrund der Rückhaltevorrichtung 28 bleibt zumindest ein Teil, gemäß Figur 5 der obere Teil, der Auslassöffnung 19 unverschlossen, so dass das Medium durch die Einlassöffnung 18, durch zumindest einen Teil der Ventilkammer 15 und zumindest einen Teil der Auslassöffnung 19 fließt. Diese Situation tritt zum Beispiel bei der Bergabfahrt eines Kraftfahrzeugs mit einem Kraftstoffbehälter mit zumindest einer Zwischenwand, an der das Ventil 10 befestigt ist, auf, so wie dies in Figur 4 dargestellt ist.

Bei einer Bergauffahrt, wie sie bereits für die Figur 3 beschrieben wurde, rollt das Rollelement 20 in Richtung der Einlassöffnung 18 und verschließt diese und / oder dichtet sie ab (siehe Figur 6). Damit ist der Durchfluss des Mediums durch das Ventil 10 und die Ventilkammer 15 verschlossen.

Um eine zuverlässige Abdichtung der Einlassöffnung 18 zu gewährleisten, ist eine exakte Ausrichtung, d.h. eine exakte Drehlagenpositionierung, des Ventils 10 notwendig, so dass der am weitesten von der Längsachse 17 der Ventilkammer 15 entfernte Punkt oder Abschnitt 18A am Außenumfang der Einlassöffnung 18 am tiefsten von allen Punkten am Außenumfang angeordnet ist, d.h. dieser Punkt 18A soll bei dem montierten Ventil 10 innerhalb der Ventilkammer 15 am weitesten unten von allen vorhandenen Punkten liegen bzw. soll sich dieser Punkt 18A am nächsten zum Erdboden befinden.

Um diese exakte Ausrichtung sicher und einfach zu gewährleisten, weist das Ventil 10 im Anschlussbereich des Ventildeckels 14A mit dem Ventilgehäuse 14B bzw. an der Schnittstelle zwischen dem Ventildeckel 14A und dem Ventilgehäuse 14B ein Ausrichtelement 21 zur Drehlagenpositionierung des Ventils 10 auf. Das Ausrichtelement 21 weist ein Passelement 22 auf, das als Abflachung oder planer Abschnitt in einer Ringnut oder einem Ringbund 41 vorgesehen ist. Der Ringbund 41 wird durch Einstiche oder Rücksprünge gebildet, im beschriebenen Ausführungsbeispiel gemäß den Figuren 5 und 6 wird der Ringbund 41 durch den Flansch 36, durch den daran anschließenden Abschnitt des Ventildeckels 14A mit dem geringeren Durchmesser und durch einen Abschnitt des Ventilgehäuses 14B mit einer verringerten Wandstärke gebildet. Das Ausrichtelement 21 zeigt zumindest an, in welcher Drehlagenpositionierung das Ventil 10 einzubauen ist. Bevorzugt jedoch erlaubt es den Einbau des Ventils 10 nur in einer einzigen, vorbestimmten Drehlagenpositionierung, in dem es zum Beispiel an ein Gegenpasselement anzufügen ist.

Wie bereits beschrieben, liegt eine bevorzugte Anwendung des Ventils 10 im Einbau des Ventils 10 in oder an eine Zwischenwand eines Kraftstoffbehälters. Um eine möglichst einfache Montage an der Zwischenwand zu erreichen, ist das Ventil 10 mit einem Verbindungselement 24 zur Verbindung des Ventils 10 mit der Zwischenwand versehen. Bevorzugt ist das Verbindungselement 24 im Anschlussbereich des Ventildeckels 14A mit dem Ventilgehäuse 14B bzw. an der Schnittstelle zwischen dem Ventildeckel 14A und dem Ventilgehäuse 14B vorgesehen. Das Verbindungselement 24 ist durch eine Vertiefung im Mantel 23 des Ventilkörpers 14, zum Beispiel durch eine Nut oder einen Bund gebildet. Bevorzugt umfasst das Verbindungselement 24 den Ringbund 41, wobei ein Teil der Zwischenwand in die Nut oder den Bund einfügbar ist, so dass beim Zusammenfügen der beiden Ventilteile 14A, 14B die Zwischenwand in der Nut oder an dem Bund eingefügt, insbesondere geklemmt, wird.

Wie aus den Figuren 5 und 6 zu erkennen ist, sind das Ausrichtelement 21, die Anschlussvorrichtung 35 und das Verbindungselement 24 in unmittelbarer Nähe zueinander bzw. gemeinsam im Anschlussbereich der beiden Ventilkörperteile 14A, 14B angeordnet bzw. umfassen zumindest teilweise die gleichen Bauteile. Durch diese Ausgestaltung ergibt sich ein äußerst kompakter Aufbau des Ventils 10, der insbesondere für die Verwendung des Ventils 10 in Zwischenwänden von Kraftstoffbehältern von großem Vorteil ist.

Am Verbindungselement 24 bzw. in dem Ringbund 41 ist ein weiteres Dichtelement 42 vorgesehen, zum Beispiel ein O-Ring, zur Abdichtung der beiden durch die Zwischenwand getrennten Kammern des Kraftstoffbehälters.

Die Erfindung ist nicht auf die beschriebenen Ausführungsbeispiele beschränkt, sondern umfasst alle Ausführungsmöglichkeiten, die die wesentlichen Merkmale der Erfindung umfassen. Es wird insbesondere darauf verwiesen, dass alte beschriebenen Ausführungsbeispiele und Erfindungen miteinander kombinierbar sind.

## Patentansprüche

1. Ventil (10) für eine Zwischenwand (11 A, 11B) eines Kraftstoffbehälters (12) für Flüssigkraftstoff (13) mit einem Ventilkörper (14), einer im Ventilkörper (14) vorgesehenen Ventilkammer (15) mit einer Innenwand (16) und mit einer Längsachse (17), einer Einlassöffnung (18) und einer Auslassöffnung (19), die beide mit der Ventilkammer (15) verbunden sind, und einem in der Ventilkammer (15) angeordneten Rollelement (20), das durch die direkt oder indirekt auf das Rollelement (20) einwirkende Schwerkraft und / oder Trägheitskräfte zwischen der Einlassöffnung (18) und der Auslassöffnung (19) bewegbar ist, wobei die Einlassöffnung (18) durch das Rollelement (20) verschließbar ist, **dadurch gekennzeichnet, dass**
die Einlassöffnung (18) exzentrisch zur Längsachse (17) der Ventilkammer (15) angeordnet ist.

2. Ventil (10) nach Anspruch 1, **dadurch gekennzeichnet, dass**
die Einlassöffnung (18) in unmittelbarer Nähe zur Innenwand (16) der Ventilkammer (15) angeordnet ist.

3. Ventil (10) nach Anspruch 1 oder 2, **gekennzeichnet durch**
ein Ausrichtelement (21) zur Drehlagenpositionierung des Ventils (10) relativ zur Zwischenwand (11 A, 11 B), wobei das Ausrichtelement (21) bevorzugt eine Markierung und / oder ein Passelement (22) umfasst.

4. Ventil (10) nach einem der vorhergehenden Ansprüche, **gekennzeichnet durch** ein, insbesondere am Außenmantel (23) des Ventilkörpers (14) angeordnetes, Verbindungselement (24) zur Verbindung des Ventils (10) mit der Zwischenwand (11 A, 11 B), wobei bevorzugt der Ventilkörper (14) zweiteilig aufgebaut ist und das Verbindungselement (24) im Anschlussbereich der beiden Ventilkörperteile (14A, 14B) oder zwischen den beiden Ventilkörperteilen (14A, 14B) vorgesehen ist.

5. Ventil (10) nach einem der vorhergehenden Ansprüche, **dadurch gekennzeichnet, dass**
die Einlassöffnung (18) und die Auslassöffnung (19) unterschiedliche Innendurchmesser aufweisen, wobei bevorzugt der Innendurchmesser der Auslassöffnung (19) größer als der Innendurchmesser der Einlassöffnung (18) ist.

6. Ventil (10) nach einem der vorhergehenden Ansprüche, **dadurch gekennzeichnet, dass**
eine Lauffläche (27) für das Rollelement (20) vorgesehen ist, die bevorzugt zwei Schienen oder Leisten (27A) aufweist.

7. Ventil (10) nach einem der vorhergehenden Ansprüche, **gekennzeichnet durch** eine Rückhaltevorrichtung (28) für das Rollelement (20) zur Verhinderung des Verschlusses der Auslassöffnung (19) **durch** das Rollelement (20).

8. Ausrichtvorrichtung zur Drehlagenpositionierung eines Ventils (10) relativ zur Zwischenwand (11A, 11B) eines Kraftstoffbehälters (12) für Flüssigkraftstoff (13), wobei das Ventil (10) und die Zwischenwand (11A, 11B) direkt oder indirekt miteinander verbindbar sind, **gekennzeichnet durch** zumindest ein Ausrichtelement (21) und ein Ventil (10) mit einer exzentrisch zur Längsachse (17) der Ventilkammer (15) angeordneten Einlassöffnung (18).

9. Ausrichtvorrichtung nach Anspruch 9, **dadurch gekennzeichnet, dass**
das zumindest ein Ausrichtelement (21) an dem Ventil (10) und / oder an der Zwischenwand (11A, 11B) vorgesehen ist.

10. Ausrichtvorrichtung nach Anspruch 9 oder 10, **gekennzeichnet durch** ein Ventil (10) nach einem der Ansprüche 1 - 7.

11. Kraftstoffbehälter (12; 62) für einen Flüssigkraftstoff (13) mit zumindest zwei Kraftstoffkammern (30A - C; 65A - C), die durch eine Zwischenwand (11 A, 11 B; 64A, 64B) getrennt sind, **gekennzeichnet durch**
eine in der Zwischenwand (11 A, 11 B; 64A, 64B) vorgesehene Ventilvorrichtung zum gerichteten Durchfluss des im Kraftstoffbehälter (12, 62) enthaltenen Kraftstoffs (13) von einer Kraftstoffkammer (30B, 30C; 65B, 65C) in die andere Kraftstoffkammer (30A, 30B; 65A, 65B) und zur Unterbindung eines Rückflusses in die Gegenrichtung.

12. Kraftstoffbehälter (12, 62) nach Anspruch 11, **dadurch gekennzeichnet, dass** die Ventilvorrichtung ein Kugelventil, insbesondere ein Ventil (10) nach einem der Ansprüche 1 - 7, oder ein Klappventil (61) umfasst.

13. Verfahren zum Einbau einer Ventilvorrichtung in eine Zwischenwand (11A, 11 B; 64A, 64B) eines Kraftstoffbehälters (12, 62) für einen Flüssigkraftstoff (13) mit zumindest zwei Kraftstoffkammern (30A - C; 65A - C), die durch die Zwischenwand (11A, 11 B; 64A, 64B) getrennt sind, **gekennzeichnet durch** die Schritte:
- zur Verfügung stellen der Zwischenwand (11A, 11 B; 64A, 64B),
- zur Verfügung stellen einer Ventilvorrichtung,
- Verbinden der Ventilvorrichtung mit der Zwischenwand (11 A, 11 B; 64A, 64B).

14. Verfahren zum Einbau einer Ventilvorrichtung nach Anspruch 13, **dadurch gekennzeichnet, dass**
die Drehlagenpositionierung der Ventilvorrichtung relativ zur Zwischenwand (11A, 11B) mittels zumindest eines Ausrichtelements (21) festgelegt wird.

15. Verfahren zum Einbau einer Ventilvorrichtung nach Anspruch 14 oder 15,
**dadurch gekennzeichnet, dass**
ein Ventil (10) nach einem der Ansprüche 1 - 7 verwendet wird.
